# EUROPÄISCHE PATENTSCHRIFT

(11) **EP 2 809 576 B1**
(45) Veröffentlichungstag und Bekanntmachung des Hinweises auf die Patenterteilung: **25.05.2016**
(21) Anmeldenummer: 13708776.3
(22) Anmeldetag: 07.03.2013
(51) Int. Cl.: B63H 21/17

(54) **ANTRIEBSKASKADIERUNG FÜR EIN WASSERFAHRZEUG**
DRIVE CASCADE SYSTEM FOR A WATERCRAFT
MISE EN CASCADE DE LA PROPULSION D'UN NAVIRE

(30) Priorität: 12.03.2012 DE 102012203820
(43) Veröffentlichungstag der Anmeldung: 10.12.2014
(73) Patentinhaber: Siemens Aktiengesellschaft, 80333 München (DE)
(72) Erfinder: HARTIG, Rainer, 21614 Buxtehude (DE); SCHRÖDER, Dierk, 24238 Selent (DE); TIGGES, Kay, 20257 Hamburg (DE); WYCISK, Michael, 24248 Mönkeberg (DE)
(86) Internationale Anmeldenummer: PCT/EP2013/054611
(87) Internationale Veröffentlichungsnummer: WO 2013/135557

(56) Entgegenhaltungen:
- WO-A2-2011/092330

## Beschreibung

Die Erfindung betrifft ein Antriebsverfahren für ein Antriebssystem mit den folgenden Verfahrensschritten:
- Betreiben zumindest eines Antriebspropellers des Antriebssystems unterhalb einer ersten vorgebbaren Propellerdrehzahl gemäß einem ersten Betriebszustand durch Betreiben zumindest eines, mit dem zumindest einen Antriebspropeller verbundenen Antriebsmotors des Antriebssystems mittels einer ersten Wechselspannung,
- wobei gemäß dem ersten Betriebszustand zumindest ein Umrichter die erste Wechselspannung bereitstellt,
- Betreiben des zumindest einen Antriebspropellers oberhalb der ersten vorgebbaren Propellerdrehzahl gemäß einem zweiten Betriebszustand durch Betreiben des zumindest einen Antriebsmotors mittels einer zweiten Wechselspannung,
- wobei gemäß dem zweiten Betriebszustand eine erste Verbrennungskraftmaschine einen ersten Generator antreibt, welcher die zweite Wechselspannung erzeugt.

Weiterhin betrifft die Erfindung eine Steuerung und eine Maschine mit zumindest einem Antriebssystem. Schließlich betrifft die Erfindung ein Computerprogramm und ein Computerprogrammprodukt.

Für Schiffe, deren Antriebssystem aufgrund ihres Fahrprofils für mehrere Geschwindigkeiten beziehungsweise Geschwindigkeitsbereiche ausgelegt und optimiert werden muss, werden bisher sogenannte vollelektrische oder Hybrid-Antriebssysteme eingesetzt. Diese Antriebssysteme bestehen in der Regel aus mindestens zwei unabhängig voneinander arbeiteten Antriebsmotoren. Sie treiben die Schiffsvortriebsanlage üblicherweise über eine Leistungsübertragungsanlage an.

Die Leistungsübertragungsanlage kann zum Beispiel folgende Komponenten umfassen: eine Wellenanlage mit den dazugehörigen Lagern und einem Drucklager, eine Kupplung zwischen Antriebsmotor und Wellenanlage sowie ein Untersetzungsgetriebe zwischen Antriebsmotor und Wellenanlage. Die Schiffsvortriebsanlage kann insbesondere einen Festpropeller oder eine Verstellpropelleranlage umfassen.

Die in den vollelektrischen oder Hybrid-Antriebssystemen zum Einsatz kommenden elektrischen Fahrmotoren werden beim bekannten Stand der Technik in der Regel aus einem Fahrnetz mit konstanter Spannung und Frequenz versorgt. Zur Drehzahlregelung der elektrischen Fahrmotoren werden diese über einen Konverter versorgt, welcher die Festspannung und -frequenz in eine variable Spannung mit variabler Frequenz umformt, welche jeweils zwischen nahezu Null und einer maximalen Spannung beziehungsweise einer maximalen Frequenz liegt. Die logische Konsequenz ist hierbei, dass die gesamte Antriebsleistung durch entsprechende Konverter und Transformatoren zur Verfügung gestellt werden muss. Konverter und Transformatoren stellen allerdings ein erhebliches Gewicht und Volumen dar, mit der Konsequenz, dass zum Beispiel gewichtskritische Schiffstypen, wie "lightweight ships", mit solchen Antriebssystemen bisher nicht ausgerüstet werden können.

Alternativ kann ein Schiffsanlagensystem vorgesehen werden, welches mindestens einen Generator in einem Fahrnetz umfasst und das Schiff über wenigstens eine elektrische Welle antreibt, wobei die elektrische Welle mit einer Schiffsvortriebsanlage verbunden ist und mindestens einen Fahrmotor umfasst. Dabei wird unter dem Fahrnetz jenes elektrische Netz verstanden, welches die Antriebsleistung des Schiffs bereitstellt. Vorzugsweise kommen hierzu zwei oder mehr Generatoren zum Einsatz, welche auch Fahrnetzgeneratoren genannt werden und zum Beispiel durch Dieselaggregate oder Gasturbinen angetrieben werden. Der Fahrmotor umfasst zum Beispiel einen Jet und einen Propeller. Als elektrische Welle wird eine feste elektrische Kopplung von Generatoren mit Antriebsmotoren verstanden, welche derart ist, dass eine Drehbewegung der Generatoren eine entsprechende Drehbewegung der elektrischen Antriebsmotoren bewirkt. Die Funktion einer mechanischen Welle wird mit einer solchen elektrischen Welle nachgebildet. Die Generatoren des Fahrnetzes können elektrisch verbunden werden und sind bezüglich Polzahl und Spannung abgestimmt mit dem Fahrmotor beziehungsweise den Fahrmotoren.

Die Generatoren können sowohl untereinander als auch mit den Fahrmotoren verbunden werden, unter der Voraussetzung, dass die jeweiligen Spannungen und Frequenzen synchronisiert sind. Weiterhin ist an das Fahrnetz ein Transformator mit mindestens einem Konverter angeschlossen, der sowohl auf das Bordnetz als auch auf einen Propellermotor geschaltet werden kann, wobei das Bordnetz das verbleibende elektrische Netz des Schiffes darstellt, welches beispielsweise die elektrische Leistung für Beleuchtung, Navigations- und Steuerungsgeräte und dergleichen bereitstellt. Da das Bordnetz üblicherweise auch über eine eigene Energieerzeugung verfügt, vorzugsweise für Not- und Hafenbetrieb, und beispielsweise mit Mehrstoffverbrennungsaggregaten und verbundenen Generatoren gespeist wird, ist es zusätzlich möglich, den Fahrmotor bis zu einer bestimmten Drehzahl des Fahrmotors auch aus dem Bordnetz zu versorgen. Hierzu kann ein Bordnetzumrichter oder ein weiterer Umrichter zum Einsatz kommen, der die Bordnetzspannung, eine Wechselspannung mit konstanter Frequenz und konstanter Amplitude, in eine Wechselspannung variabler Frequenz und variabler Amplitude für den Betrieb des Fahrmotors umrichtet. Dieser Umrichter wird auch Anlasskonverter oder Anfahrkonverter genannt und kann prinzipiell auch umgekehrt betrieben werden, so dass die veränderliche Wechselspannung des Fahrnetzes in die Bordnetzspannung umgewandelt wird.

Das Versorgen des Fahrmotors aus dem Bordnetz ist nötig, da die elektrische Welle aufgrund der Leerlaufdrehzahl der Verbrennungskraftmaschinen nicht unter einer bestimmten Frequenz betrieben werden kann. Dadurch kann anhand eines Antriebssystems, welches ausschließlich durch eine elektrische Welle gespeist wird, die Vortriebsanlage nicht stufenlos in ihrer Drehzahl vom Stillstand bis zur Leerlaufdrehzahl der Verbrennungskraftmaschine betrieben werden. Dies hat zur Folge, dass das Drehmoment bei der Leerlaufdrehzahl beim Einschalten der elektrischen Welle auf den Schiffspropulsor wirkt und somit die Schiffsgeschwindigkeit beziehungsweise die Manövrierfähigkeit des Schiffes für eine langsame Fahrt unbefriedigend ist, beispielsweise beim Hafenbetrieb und beim Manövrieren. Des Weiteren ist es wünschenswert, dass das Drehmoment unterbrechungsfrei auf den Schiffspropeller wirkt, was den Umschaltzeitpunkt bei der Leerlaufdrehzahl mit steigender oder sinkender Drehzahl betrifft.

Aus der WO2011092330A2 ist ein solches zuvor genanntes alternatives Schiffsanlagensystem bekannt, wobei mehrere elektrische Antriebswellen sowie die Versorgung von Antriebsmotoren mittels der elektrischen Wellen oder mittels eines Bordnetzes vorgesehen sind.

In einem Betriebszustand kann ein Antriebspropeller des Schiffes mittels zumindest einer elektrischen Welle, welche jeweils eine Verbrennungskraftmaschine und einen Generator umfasst, angetrieben werden, wobei die Verbrennungskraftmaschine und folglich auch der Antrieb des Antriebspropellers in diesem Betriebszustand eine Mindestdrehzahl aufweisen. Bei einem anderen Betriebszustand, bei dem die Propellerdrehzahlen kleiner als diese Mindestdrehzahl sind, kann der Antriebspropeller mittels des Bordnetzes, insbesondere mit einer Wechselspannung niedrigerer Frequenz, versorgt werden. Dies erlaubt den Einsatz eines Festpropellers auch bei niedrigen gewünschten Schiffsgeschwindigkeiten.

Der Erfindung liegt die Aufgabe zugrunde, ein Wasserfahrzeug vom Stillstand bis zur Maximalgeschwindigkeit und umgekehrt bei kontinuierlichem Vortrieb unter Vermeidung von ruckhaften Vortriebsänderungen bewegen zu können bei gleichzeitig wirtschaftlichem Betrieb der einzelnen Antriebskomponenten.

Diese Aufgabe wird bei einem Antriebsverfahren der eingangs genannten Art dadurch gelöst, dass bei einem Übergang vom ersten in den zweiten Betriebszustand oder umgekehrt die erste Verbrennungskraftmaschine zunächst mit einer derartigen Drehzahl betrieben wird, dass der zumindest eine Antriebspropeller mit der ersten vorgebbaren Propellerdrehzahl betrieben wird, und der zumindest eine Umrichter die erste Wechselspannung mit der zweiten Wechselspannung synchronisiert.

Diese Aufgabe wird weiter gelöst durch eine Steuerung gemäß Anspruch 6, ein Wasserfahrzeug gemäß Anspruch 7, ein Computerprogramm gemäß Anspruch 8 und ein Computerprogrammprodukt gemäß Anspruch 9.

Das Vorhandensein mehrerer Betriebszustände, insbesondere für unterschiedliche Geschwindigkeitsbereiche, sowie der Übergang zwischen den Betriebszuständen werden hierbei als Antriebskaskadierung bezeichnet, da für den jeweiligen Geschwindigkeitsbereich die Antriebsleistung auf unterschiedliche Weise bereitgestellt wird.

Die Synchronisation der zum Antrieb verwendeten Wechselspannungen des ersten und des zweiten Betriebszustand erlaubt eine optimale Manövrierfähigkeit während des Übergangs vom einen in den anderen Betriebszustand, insbesondere im niedrigen Geschwindigkeitsbereich. Während eine vergleichbare Manövriergenauigkeit bei Schiffsantrieben oftmals nur durch den Einsatz von Verstellpropellern erreicht wird, wird die Manövriergenauigkeit mit kostengünstigeren, herkömmlichen Festpropellern anhand des erfindungsgemäßen Verfahrens möglich, wobei vorteilhafterweise gleichzeitig eine zusätzliche Redundanz geschaffen wird. Dies ist besonders bei schon bestehenden Schiffsantrieben mit Festpropellern interessant, die bisher besonders während des An- und Ablegens im Hafen vergleichsweise ungenau manövriert werden können, da insbesondere im Hafen bei geringer Geschwindigkeit genau positioniert werden muss. Durch das Nachrüsten eines solchen Wasserfahrzeugs mit für das erfindungsgemäße Verfahren benötigten Mitteln kann auch für ältere Wasserfahrzeuge oder Wasserfahrzeuge mit Festpropellern die Manövrierfähigkeit verbessert werden. Von Vorteil ist bei dem erfindungsgemäßen Verfahren insbesondere, dass Komponenten genutzt werden, über welche ein Wasserfahrzeug im Normalfall unabhängig vom Antriebssystem verfügt und dennoch eine Verbesserung der Manövrierfähigkeit erreicht werden kann.

Verfahrensgemäß ist vorgesehen, das Wasserfahrzeug bei sehr niedrigen Geschwindigkeiten gemäß dem ersten Betriebszustand zu betreiben, das heißt unter Verwendung zumindest eines Umrichters. Dabei kann der zumindest eine Umrichter Leistung, beispielsweise von einem Bordnetz, entnehmen, um damit, beispielsweise unter Verwendung eines Transformators, die erste Wechselspannung bereitzustellen, mit welcher der mit dem zumindest einen Antriebspropeller verbundene Antriebsmotor gespeist wird. Das Bordnetz kann beispielsweise durch ein Mehrstoffverbrennungsaggregat unter Verwendung von Autogas (LPG) oder Flüssigerdgas (LNG) und einem verbundenen Bordnetzgenerator gespeist werden. Prinzipiell ist auch denkbar, dass mehrere Antriebsmotoren jeweils zumindest einen Antriebspropeller antreiben. Dabei ist es möglich, dass die gesamte Antriebsleistung auf mehrere Antriebsmotoren, welche jeweils einer elektrischen Welle zugeordnet sind, verteilt wird, aber auch, dass im niedrigen Drehzahlbereich nur ein Motor angetrieben wird.

Da der zumindest eine Umrichter Wechselspannungen veränderlicher Frequenz bereitstellen kann, kann der zumindest eine Antriebspropeller vom Stillstand aus mit sehr kleinen Propellerdrehzahlen bewegt werden. Die Propellerdrehzahlen können kontinuierlich und ruckfrei vom Stillstand aus erhöht werden, bis eine erste vorgebbare Propellerdrehzahl erreicht wird, wobei in gleicher Weise eine Reduzierung der Propellerdrehzahl zu bewerkstelligen ist.

Diese erste vorgebbare Propellerdrehzahl kann insbesondere durch das Erreichen einer gewissen vom Bordnetz maximal entnehmbaren Leistung, durch die Mindestdrehzahl der ersten Verbrennungskraftmaschine oder eine beliebige Drehzahl der ersten Verbrennungskraftmaschine charakterisiert werden. Die Verbrennungskraftmaschine kann beispielsweise als Dieselmotor oder als Gasturbine oder dergleichen ausgeführt sein. Dieselmotoren bzw. Gasturbinen weisen üblicherweise eine Mindestdrehzahl in einer Größenordnung von 100 Umdrehungen bzw. 1000 Umdrehungen pro Minute auf. Bei der Wahl der vorgebbaren Propellerdrehzahl kann gegebenenfalls auch eine drehzahlabhängige Effizienz der Verbrennungskraftmaschine berücksichtigt werden.

Prinzipiell sind die Propellerdrehzahl und damit die Geschwindigkeit des Wasserfahrzeugs eines Betriebszustands durch die maximale Leistung der jeweiligen Antriebskomponenten, beispielsweise von Verbrennungskraftmaschinen und zugehörigen Generatoren bzw. Umrichtern, begrenzt. Auch die im Bordnetz entbehrbare Leistung kann diesbezüglich zu Einschränkungen führen, so dass diese Parameter bei der Durchführung dieser Ausgestaltung des Verfahrens zu berücksichtigen sind. Aufgrund ihrer Überlastfähigkeit bietet der Einsatz von Gasturbinen Vorteile bezüglich der Maximalleistung, insbesondere bei Notfällen, bei denen besonders hohe Leistungen benötigt werden oder Teile des Antriebssystems ausgefallen sind.

Für einen Übergang vom ersten in den zweiten Betriebszustand wird die erste Verbrennungskraftmaschine zunächst gestartet und dann mit einer Drehzahl betrieben, so dass die erste vorgebbare Propellerdrehzahl damit erreicht werden kann. Schließlich führt der zumindest eine Umrichter eine Synchronisation derart durch, dass die zweite Wechselspannung, welche der erste Generator bereitstellt, beibehalten wird und der Verbund von erster Verbrennungskraftmaschine und erstem Generator als Master fungiert. Der zumindest eine Umrichter fungiert hingegen als Slave, indem die erste Wechselspannung vom zumindest einen Umrichter an die zweite Wechselspannung, beispielsweise bezüglich Frequenz, Phasenwinkel und Spannungsamplitude, innerhalb eines vernünftigen Toleranzbereichs angepasst wird, bis der erste Generator und der zumindest eine Umrichter eine synchronisierte Wechselspannung erzeugen. Dann kann ein sanfter Übergang der Energieversorgung vom zumindest einen Umrichter auf den ersten Generator vorgenommen werden. Die genannten Größen der zweiten Wechselspannung können insbesondere von einer Endstufe des Umrichters variiert werden, welche Leistungshalbleiter umfassen kann, die derart angesteuert werden, dass die gewünschte Form der zweiten Wechselspannung erzeugt wird.

Nach dem Übergang kann die Leistung des Bordnetzes angepasst werden, beispielsweise durch Herunterfahren von Bordnetzmotoren, die das Bordnetz über Bordnetzgeneratoren mit Energie versorgen. Dadurch kann Energie eingespart werden und die einzelnen Komponenten des Antriebssystems werden nahe an ihrem optimalen Betriebszustand betrieben. Im ersten Betriebszustand und wenn kein Übergang in den zweiten Betriebszustand zu erwarten ist, kann die erste Verbrennungsmaschine ausgeschaltet bleiben, um Brennstoff einzusparen. Dadurch, dass im ersten Betriebszustand Verbrennungsmaschinen ausgeschaltet bleiben können, kann eine Schleichfahrt realisiert werden, bei der das Wasserfahrzeug nur geringe Schallemissionen aufweist. Dazu kann der Umrichter beispielsweise durch eine Batterieanlage, eine Brennstoffzellenanlage oder ein gut gekapseltes Bordnetzaggregat mit Energie versorgt werden.

Weiterhin kann die zum Synchronisieren benötigte Zeit bei Ablauf des Verfahrens derart berücksichtigt werden, dass die erste Verbrennungskraftmaschine früh genug gestartet wird, um eine kontinuierlich erhöhbare Propellerdrehzahl zu gewährleisten, selbst wenn eine möglichst schnellen Beschleunigung des Wasserfahrzeugs gewünscht ist. Die benötigte Zeit wird beispielsweise durch eine Zeitkonstante des Antriebs beeinflusst, da eine veränderte Propellerdrehzahl eine gewisse Zeit voraussetzt, bis sie als Schub im Wasser umgesetzt werden kann. Zusätzlich ist auch eine Zeitkonstante des Energieerzeugungssystems zu berücksichtigen, da auch eine Rolle spielt, wie schnell elektrische Energie von dem zumindest einen Umrichter oder dem ersten Generator dem zumindest einen Antriebsmotor zugeführt werden kann. Beispielsweise dauert das Anlaufen eines Dieselmotors etwa 30 Sekunden und einer Gasturbine etwa 10 Sekunden, wobei bei einer Gasturbine ein vorgewärmter und vorgeschmierter Zustand vorausgesetzt wird. Sollte die Gasturbine noch nicht in diesem Zustand sein, verlängert sich die Zeit, bis zu der sie verfügbar ist, unter Umständen beträchtlich. Die Synchronisation kann bei einem Umrichter dagegen vergleichsweise schnell durchgeführt werden, üblicherweise innerhalb weniger Sekunden. Insbesondere bei Notmanövern, wie zum Beispiel einem Notstopp oder einer gewünschten schnellstmöglichen Beschleunigung, können solche Zeitkonstanten zur rechtzeitigen Synchronisation dahingehend verwendet werden, dass die erste Verbrennungskraftmaschine rechtzeitig hochgefahren wird.

Nach dem Übergang in den zweiten Betriebszustand kann die Leistung des Antriebssystems beziehungsweise die Propellerdrehzahl ohne Auftreten eines Rucks erhöht werden, indem die Drehzahl der ersten Verbrennungskraftmaschine erhöht wird.

Bei einem Übergang vom zweiten in den ersten Betriebszustand wird die Propellerdrehzahl soweit erniedrigt, bis die erste Verbrennungskraftmaschine eine Drehzahl erreicht, die in der ersten vorgebbaren Propellerdrehzahl resultiert. Der zumindest eine Umrichter führt dann wiederum als Slave eine Synchronisation derart durch, dass er die erste Wechselspannung an die zweite Wechselspannung anpasst, beispielsweise in Bezug auf Frequenz, Phasenwinkel und Spannungsamplitude. Nach erfolgter Anpassung kann ein sanfter Übergang der Energieversorgung vom ersten Generator auf den zumindest einen Umrichter vorgenommen werden und die erste Verbrennungskraftmaschine kann gegebenenfalls abgeschaltet werden, um Kraftstoff zu sparen.

Das Verfahren kann beispielsweise bei Passagierschiffen eingesetzt werden, um den Reisekomfort an Bord zu erhöhen. Weiterhin ist eine Anwendung in Unterwasserfahrzeugen denkbar, was eine Schleichfahrt erlaubt, da unnötige Vibrationen und Erschütterungen anhand des Verfahrens vermindert werden können. Durch das Verfahren kann das Wasserfahrzeug ruckfrei und kontinuierlich vom Stillstand ausgehend beschleunigen und von einer bestimmten Geschwindigkeit ausgehend ruckfrei und kontinuierlich verzögert werden, wobei stets die Propellerdrehzahl und die von dem zumindest einen Antriebspropeller abgegebene Leistung stufenlos gewählt werden können.

Vorzugsweise wird das Schiffsantriebssystem durch einen oder mehrere Fahrhebel derart kontrolliert, dass eine Steuerung mit einem Powermanagement für jede Schiffsgeschwindigkeit beziehungsweise Propellerdrehzahl einen optimalen Betriebszustand auswählt. Schalthandlungen können in Abhängigkeit von Sollwertvorgaben durch den Fahrhebel unter Berücksichtigung der Verfahrensschritte selbsttätig durch ein Regel- und Steuersystem ausgeführt werden. Der optimale Betriebszustand stellt dabei eine optimale Antriebsart dar, indem eine optimierte Anzahl an Verbrennungskraftmaschinen und damit angetriebenen Generatoren des Fahrnetzes und an Propellermotoren bestimmt wird und festgelegt wird, ob zusätzliche Leistung vom Umrichter und dem Bordnetz hinzugezogen wird. Die elektrische Antriebsanlage ist hierbei an die Schiffsvortriebsanlage in Bezug auf die maximale Propellerdrehzahl und das maximal mögliche abzugebende Drehmoment angepasst. Die Antriebsmotoren können unterhalb ihrer Grenzkennlinien im Drehzahlbereich zwischen Stillstand und maximaler Drehzahl stufenlos jede Drehzahl und jedes Drehmoment abgeben. Bei Notmanövern können die erwähnten Zeitkonstanten bis an die Grenzen der Belastbarkeit der Systemkomponenten gefahren werden, was insbesondere beim Einsatz von supraleitenden Synchronmaschinen zu tragen kommen kann, welche eine vergleichsweise steife Strom-Spannungs-Kennlinie aufweisen.

Generell ist eine Anwendung bei schnellen und leichten Wasserfahrzeugen, wie zum Beispiel Hochgeschwindigkeits-Mehrhüllenschiffe wie Katamaranen und Trimaranen vorteilhaft, da große und leistungsstarke Umrichter und Transformatoren, insbesondere für mittlere und höhere Geschwindigkeiten, eingespart werden können. Derartige Umrichter und Transformatoren benötigen üblicherweise vergleichsweise viel Bauraum, sind eher kostenintensiv und vergleichsweise schwer, so dass deren Einsparung finanzielle Vorteile bietet und erlaubt, die Wasserfahrzeuge leichter und schneller zu konzipieren. Lediglich der zumindest eine Umrichter des Bordnetzes wird zusätzlich zu seinen herkömmlichen Einsatzgebieten nun auch für Antriebszwecke verwendet. Dadurch lassen sich niedrige Drehzahlen von Bordnetzaggregaten, welche die Bordnetzgeneratoren zur Energieerzeugung antreiben, vermeiden und die Bordnetzaggregate können nahe an ihrem optimalen Betriebspunkt betrieben werden, was Energieeinsparungen ermöglicht.

Da der Antrieb des Wasserfahrzeugs mit Hilfe des Bordnetzes oder mittels einer elektrischen Welle zu bewerkstelligen ist, weist das Antriebssystem eine Redundanz auf, die das Wasserfahrzeug auch bei technischen Problemen einer der Energieerzeugungskomponenten manövrierfähig hält. Diese Redundanz ist besonders bei Notfällen, bei denen Komponenten des Antriebssystems ausfallen, ein großer Vorteil. So können eventuell vorhandene Bordnetzaggregate, insbesondere in Notfällen oder beispielsweise bei höheren Geschwindigkeiten, abgeschaltet werden, da das Bordnetz mittels der Verbrennungskraftmaschine und des Generators der elektrischen Welle versorgt werden kann. Weitere Energieeinsparungen lassen sich auch dadurch erreichen, dass beim Verzögern des Wasserfahrzeugs der zumindest eine Antriebspropeller den Antriebsmotor antreibt, wobei ein sogenannter PTO-Betrieb ("power take out") vorliegt, da der Antriebsmotor generatorisch betrieben wird. Die somit gewonnene Energie wird über den Umrichter dem Bordnetz zugeführt. Bordnetzaggregate zur Versorgung des Bordnetzes können dann zurückgefahren werden oder ganz abgeschaltet werden. Bei den anderen Betriebsarten liegt dagegen ein sogenannter PTI-Betrieb ("power take in") vor, das heißt der Antriebsmotor wird motorisch betrieben.

Bei einer vorteilhaften Ausgestaltung der Erfindung ist folgender weiterer Verfahrensschritt vorgesehen:
- Betreiben des zumindest einen Antriebspropellers oberhalb einer zweiten vorgebbaren Propellerdrehzahl, welche größer als die erste vorgebbare Propellerdrehzahl ist, gemäß einem dritten Betriebszustand durch Betreiben des zumindest einen Antriebsmotors mittels einer dritten Wechselspannung,
- wobei gemäß dem dritten Betriebszustand die erste Wechselspannung des zumindest einen Umrichters in synchronisierter Kombination mit der zweiten Wechselspannung die dritte Wechselspannung ergibt,
- wobei bei einem Übergang vom zweiten Betriebszustand in den dritten Betriebszustand der zumindest eine Antriebsmotor erst dann mittels der dritten Wechselspannung betrieben wird, wenn die erste Wechselspannung mittels des zumindest einen Umrichters mit der zweiten Wechselspannung synchronisiert ist.

Der Übergang vom zweiten Betriebszustand in den dritten Betriebszustand erlaubt höhere Geschwindigkeiten, wobei ein praktisch ruckfreier Übergang durch die Synchronisation gewährleistet wird. Die Synchronisation erfolgt analog zum Übergang vom ersten in den zweiten Betriebszustand mit dem Unterschied, dass während des dritten Betriebszustands die Antriebsenergie für den zumindest einen Antriebspropeller von sowohl dem zumindest einen Umrichter als auch dem ersten Generator stammt. Die dritte Wechselspannung entsteht aus der Überlagerung der beiden Wechselspannungen bei angepasster Frequenz, angepasstem Phasenwinkel und angepasster Spannungsamplitude der ersten Wechselspannung in Bezug auf die zweite Wechselspannung.

Bei einer alternativen vorteilhaften Ausgestaltung der Erfindung ist folgender alternativer Verfahrensschritt vorgesehen:
- Betreiben des zumindest einen Antriebspropellers oberhalb einer dritten vorgebbaren Propellerdrehzahl, welche größer als die erste vorgebbare Propellerdrehzahl ist, gemäß einem vierten Betriebszustand durch Betreiben des zumindest einen Antriebsmotors mittels einer vierten Wechselspannung,
- wobei gemäß dem vierten Betriebszustand zumindest eine weitere Verbrennungskraftmaschine zumindest jeweils einen weiteren Generator antreibt, welcher jeweils eine weitere Wechselspannung erzeugt, welche in synchronisierter Kombination mit der zweiten Wechselspannung die vierte Wechselspannung ergibt,
- wobei bei einem Übergang vom zweiten in den vierten Betriebszustand ein jeweiliger Polradwinkel des zumindest einen weiteren Generators mit einem ersten Polradwinkel des ersten Generators synchronisiert wird.

Da jede elektrische Welle sehr leistungsstark ausgelegt werden kann, insbesondere im Vergleich mit der im Bordnetz verfügbaren Leistung, erlaubt ein Antriebssystem mit mehreren Verbrennungskraftmaschinen und jeweils verbundenen Generatoren vergleichsweise hohe Geschwindigkeiten. Diese Ausführungsform ist wegen der hohen möglichen Geschwindigkeit und auch wegen des komfortablen, praktisch ruckfreien Zuschaltens einer größeren Antriebsleistung besonders für schnelle Wasserfahrzeuge, insbesondere Passagierschiffe oder Unterwasserfahrzeuge, interessant.

Gemäß dieser Ausführungsform des Verfahrens ist vorgesehen, die einzelnen Generatoren zu synchronisieren, wobei der erste Generator als Master betrieben wird. Der erste Generator weist einen Läufer auf, dessen Position durch den Polradwinkel charakterisiert wird. Auch der zumindest eine weitere Generator weist jeweils einen Läufer mit einem jeweiligen Polradwinkel auf. Unter der Annahme, dass die Generatoren jeweils dieselbe Polpaarzahl aufweisen, wird die Synchronisation der Generatoren dadurch erreicht, dass der zumindest eine weitere Generator beziehungsweise die zumindest eine weitere Verbrennungskraftmaschine mit derselben Drehzahl wie der erste Generator beziehungsweise die erste Verbrennungskraftmaschine betrieben wird und zusätzlich der jeweilige Polradwinkel und die jeweilige Spannungsamplitude der Generatoren übereinstimmen. Sobald dies der Fall ist, können die weiteren Generatoren praktisch ruckfrei zugeschaltet werden. Sollten die Generatoren jeweils unterschiedliche Polpaarzahlen aufweisen, ist das Verfahren dennoch durchführbar, sofern die unterschiedlichen Polpaarzahlen bei der jeweiligen Generatorfrequenz und dem jeweiligen Polradwinkel berücksichtigt werden. Zum Übergang in den vierten Betriebszustand wird die zumindest eine weitere Verbrennungskraftmaschine mit einer vergleichsweise hohen Drehzahl betrieben. Zusätzliche Antriebsleistung erhält man anschließend dadurch, dass zumindest eine der Verbrennungskraftmaschinen durch erhöhte Brennstoffzufuhr versucht, zu beschleunigen. Der Polradwinkel des mit jener Verbrennungskraftmaschine verbundenen Generators würde damit den Polradwinkeln der anderen Generatoren leicht vorauseilen. Dadurch übernimmt jene Verbrennungskraftmaschine zusätzliche Last und dem gesamten Antriebssystem steht mehr Leistung zu Verfügung. Selbstverständlich können für diesen Zweck die Verbrennungskraftmaschinen auch möglichst gleichzeitig hochgefahren werden bis schließlich die einzelnen Verbrennungskraftmaschinen ihre jeweiligen Leistungsgrenzen erreichen.

Ein Übergang vom vierten Betriebszustand in den zweiten Betriebszustand wird durch Verringerung der Propellerdrehzahl und anschließendes Beaufschlagen des zumindest einen Antriebsmotors mit lediglich der zweiten Wechselspannung erreicht.

Gemäß einer weiteren Ausführungsform des Verfahrens ist weiterhin folgender Verfahrensschritt vorgesehen:
- Betreiben des zumindest einen Antriebspropellers oberhalb einer vierten vorgebbaren Propellerdrehzahl gemäß einem fünften Betriebszustand durch Betreiben des zumindest einen Antriebsmotors mittels einer fünften Wechselspannung,
- wobei gemäß dem fünften Betriebszustand die erste Wechselspannung des zumindest einen Umrichters in synchronisierter Kombination mit der vierten Wechselspannung die fünfte Wechselspannung ergibt,
- wobei bei einem Übergang vom vierten Betriebszustand in den fünften Betriebszustand der zumindest eine Antriebsmotor erst dann mittels der fünften Wechselspannung betrieben wird, wenn die erste Wechselspannung mittels des zumindest einen Umrichters mit der dritten Wechselspannung synchronisiert ist.

Durch Kombination der Leistungen der ersten Verbrennungskraftmaschine, der zumindest einen weiteren Verbrennungskraftmaschine und schließlich des zumindest einen Umrichters kann der zumindest eine Antriebspropeller bis zu seiner maximalen Propellerdrehzahl betrieben werden, so dass das Wasserfahrzeug seine maximale Geschwindigkeit erreichen kann. Durch das synchronisierte Zuschalten der ersten Wechselspannung zur vierten Wechselspannung anhand des als Slave betriebenen Umrichters ist der Übergang vom vierten Betriebszustand in den fünften Betriebszustand ebenfalls praktisch ruckfrei möglich.

Der fünfte Betriebszustand kann insbesondere in Notsituationen wichtig sein, bei denen die Höchstpropellerdrehzahl erreicht werden muss. Dabei können die zuvor erwähnten Zeitkonstanten gegebenenfalls derart berücksichtigt werden, dass möglichst schnell möglichst viel Leistung auf den zumindest einen Antriebspropeller übertragen werden kann.

Der Übergang vom fünften Betriebszustand in den vierten Betriebszustand ist vorzugsweise dadurch möglich, dass der zumindest eine Umrichter kontinuierlich seine dem zumindest einen Antriebsmotor zugeführte Leistung verringert, bis schließlich keine Leistung mehr übertragen wird.

Gemäß einer weiteren Ausführungsform des Verfahrens wird während des Betriebs in einem der Betriebszustände im Fall eines Ausfalls von zum Erzeugen der jeweiligen Wechselspannung erforderlichen Teilen des Antriebssystems in einen anderen Betriebszustand übergegangen,
wobei eine Synchronisation der jeweiligen Wechselspannung des anderen Betriebszustands unter Berücksichtigung der am zumindest einen Antriebsmotor anliegenden Wechselspannung vorgenommen wird.

Wie schon erwähnt, bietet die Verteilung der Antriebsleistung auf mehrere Energieerzeugungskomponenten und beispielsweise mehrere Antriebspropeller und Antriebsmotoren den Vorteil von Redundanzen, welche erlauben, das Wasserfahrzeug auch bei technischen Problemen einer der Antriebskomponenten manövrierfähig zu halten.

Bei einem Ausfall oder einer technisch bedingten Minderleistung einer der Verbrennungskraftmaschinen oder eines der Generatoren kann beispielsweise eine weitere Verbrennungskraftmaschine und ein durch sie angetriebener Generator oder der zumindest eine Umrichter in synchronisierter Weise zugeschaltet werden. Aufgrund der erwähnten Zeitkonstanten kann die Zuschaltung normalerweise erst nach dem Wegfall der Leistung der ausgefallenen Verbrennungskraftmaschinen oder des ausgefallenen Generators stattfinden. Sobald der Ausfall registriert wird, wird die weitere Verbrennungskraftmaschine oder gegebenenfalls das den Umrichter speisende Bordnetzaggregat hochgefahren, um den Übergang in einen anderen Betriebszustand vorzubereiten. Der Übergang findet statt, sobald Synchronität der durch die hochgefahrenen Teile des Antriebssystems erzeugten Wechselspannung in Bezug auf die am zumindest einen Antriebsmotor anliegenden Wechselspannung erreicht wird, wobei Synchronität der Wechselspannungen vorliegt, wenn die jeweiligen Frequenzen, Amplituden und Phasenwinkel übereinstimmen. Dabei kann es, insbesondere für den Fall, dass eine leistungsstarke Verbrennungskraftmaschine durch ein vergleichsweise schwaches Bordnetzaggregat ersetzt werden muss, dazu kommen, dass eine erheblich geringere Antriebsleistung zur Verfügung steht. Der Übergang kann für diesen Fall insbesondere erst nach einer Abbremsphase des Schiffes und gegebenenfalls einem Turbinenbetrieb des Antriebspropellers und des Antriebsmotors stattfinden und wird erst dann vollzogen, wenn der Umrichter eine ausreichend große Leistung bereitstellen kann, welche in einer passenden Propellerdrehzahl resultiert. Die Leistungsübergabe vom Umrichter an den Antriebsmotor kann dann praktisch ruckfrei stattfinden.

Bei einem Ausfall eines Bordnetzaggregats oder eines Umrichters bei einem Betrieb im ersten Betriebszustand ist es unter Umständen lediglich möglich, die ausgefallenen Teile des Antriebssystems durch eine Verbrennungskraftmaschine und den damit angetriebenen Generator zu ersetzen. Wenn die Propellerdrehzahl vergleichsweise gering ist, wird vorteilhafterweise die leistungsschwächste Verbrennungskraftmaschine zugeschaltet, so dass ein möglichst sanfter Übergang stattfinden kann. Dabei wird die Propellerdrehzahl derart berücksichtigt, dass oberhalb einer bestimmten, vorgebbaren Propellerdrehzahl ein synchronisierter Übergang stattfindet. Unterhalb der bestimmten, vorgebbaren Propellerdrehzahl muss beispielsweise eine gesonderte Freigabe für den Übergang erfolgen, da aufgrund der Mindestdrehzahl der Verbrennungskraftmaschine lediglich ein vergleichsweise ruckhafter Übergang unter Verwendung der Verbrennungskraftmaschine und dem damit angetriebenen Generator als Master stattfinden kann.

Im Übrigen können für die Generatoren und / oder die Antriebsmotoren Hochtemperatur-Supraleiter (HTSL)-Wicklungen zum Einsatz kommen. Dies hat den Vorteil, dass das Antriebssystem eine höhere Leistungsdichte aufweist. Somit kann bei gleichem Bauraum eine höhere Leistung erzielt werden beziehungsweise bei gleicher Leistung wird weniger Bauraum benötigt. Zusätzlich bietet die Verwendung von HTSL-Maschinen den Vorteil, dass Oberwellen im elektrischen Antriebssystem vermindert werden können.

Bei der Supraleiter-Wicklung kann es sich um eine Ständerwicklung oder um eine rotierende Läuferwicklung des Generators handeln. Ein Generator mit einer Supraleiter-Wicklung weist zudem üblicherweise einen im Vergleich zu einem konventionellen Generator ohne Supraleiter-Wicklung wesentlich größeren magnetischen Luftspalt zwischen Läufer und Ständer auf. Dies liegt vor allem daran, dass der Supraleiter durch einen Vakuumkryostaten oder eine ähnliche Kühleinrichtung gekühlt wird, dessen bzw. deren Wandung im Luftspalt verläuft. Der relativ große magnetische Luftspalt bewirkt, dass der Generator eine wesentlich geringere synchrone Reaktanz als ein konventioneller Generator aufweist. Dies führt dazu, dass bei gleicher elektrischer Leistung ein HTSL-Generator im Vergleich zu einem herkömmlichen Generator eine deutlich steifere Strom-Spannungs-Kennlinie aufweist. Hierdurch kommt es bei Lastaufschaltungen oder -stoßen zu keinem Einbruch der von dem Generator erzeugten Spannung, was insbesondere in Notsituationen mit extremen Leistungsanforderungen vor Vorteil ist. Spannungs- und Frequenz-Schwankungen in der elektrischen Welle können hierdurch reduziert werden. Damit wird keine aufwändige Regelung für die elektrische Welle zur Stabilisierung der Spannung der Antriebswelle und der Drehzahl der Antriebsmotoren bzw. der Vortriebseinheit benötigt.

Im Folgenden wird die Erfindung anhand der in den Figuren dargestellten Ausführungsbeispiele näher beschrieben und erläutert. Es zeigen:
FIG 1 ein erstes Ausführungsbeispiel eines Antriebssystems eines erfindungsgemäßen Wasserfahrzeugs und
FIG 2 einen beispielhaften Verlauf einer Antriebskaskadierung in Abhängigkeit einer relativen Propellerdrehzahl.

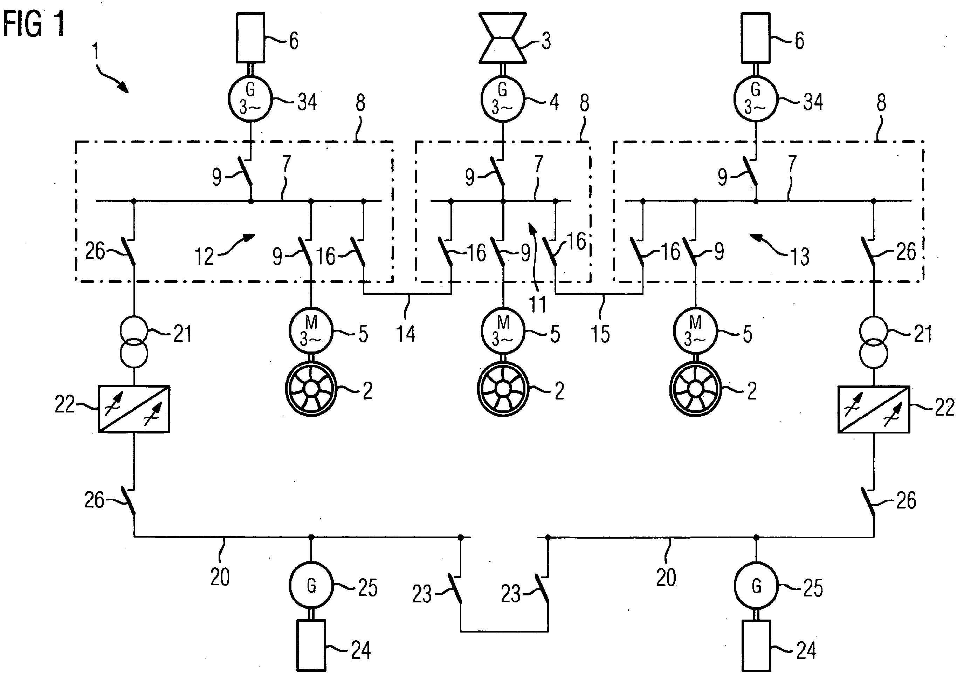

Figur 1 zeigt ein erstes Ausführungsbeispiel eines Antriebssystems eines erfindungsgemäßen Wasserfahrzeugs. Das Antriebssystem umfasst drei elektrische Antriebswellen 11, 12, 13 zum Antrieb jeweils eines Antriebspropellers 2.

Die erste Antriebswelle 11 umfasst einen von einer ersten Verbrennungskraftmaschine 3 angetriebenen drehzahlveränderbaren Generator 4 zur Erzeugung einer Motorspannung mit variabler Amplitude und variabler Frequenz und einen mit dieser Motorspannung versorgten und mit einem Antriebspropeller 2 gekoppelten drehzahlveränderbaren Antriebsmotor 5.

Die zweite Antriebswelle 12 und die dritte Antriebswelle 13 umfassen jeweils einen weiteren von jeweils einer weiteren Verbrennungskraftmaschine 6 angetriebenen drehzahlveränderbaren Generator 34 zur Erzeugung einer Motorspannung mit variabler Amplitude und variabler Frequenz und einen mit dieser Motorspannung versorgten und mit einem Antriebspropeller 2 gekoppelten drehzahlveränderbaren Antriebsmotor 5. Die erste Verbrennungskraftmaschine 3 und die weiteren Verbrennungskraftmaschinen 6 können jeweils beispielsweise als Gasturbine oder als Dieselmotor ausgeführt sein.

Bei den Antriebswellen 11, 12, 13 kann jeweils ein Generator 4, 34 und ein Antriebsmotor 5 über einen Sammelleiter 7 miteinander elektrisch verbunden werden. Der Anschluss der Generatoren 4, 34 und der Antriebsmotoren 5 an den Sammelleiter 7 erfolgt dabei über jeweils einen Schalter 9. Der Sammelleiter 7 und die Schalter 9 sind ein Bestandteil einer Schaltanlage 8. Der Sammelleiter 7 der ersten Antriebswelle 11 ist dabei über eine Leitungsverbindung 14 mit dem Sammelleiter 7 der zweiten Antriebswelle 12 und über eine Leitungsverbindung 15 mit dem Sammelleiter 7 der dritten Antriebswelle 13 verbindbar. Der Anschluss der Leitungsverbindungen 14, 15 an die Sammelleiter 7 erfolgt dabei über jeweils einen Schalter 16.

Über die Leitungsverbindungen 14, 15 und die Schalter 16 ist die erste Antriebswelle 11 wahlweise mit der zweiten und/oder der dritten Antriebswelle 12, 13 koppelbar. Zwischen einem der Generatoren 4, 34 und einer der Verbrennungskraftmaschinen 3, 6 kann zusätzlich noch ein mechanisches Getriebe geschaltet sein. Dies ist auch zwischen einem der Antriebspropeller 2 und einem der Antriebsmotoren 5 denkbar. Außerdem können die Antriebswellen 11, 12, 13 statt nur jeweils eines einzigen Generators 4 und Antriebsmotors 5 auch mehrere Generatoren und/oder Antriebsmotoren umfassen.

Mit der von den Generatoren 34 der elektrischen Antriebswellen 12, 13 erzeugten Spannung variabler Amplitude und variabler Frequenz kann über einen Transformator 21 zusätzlich jeweils ein Umrichter 22 betrieben werden, der diese variable Spannung in eine Spannung mit konstanter Amplitude und konstanter Frequenz für jeweils ein Teilbordnetz 20 umwandelt. Aus dem Teilbordnetz 20 werden nicht näher dargestellte Niederspannungsverbraucher des Schiffes (z.B. Navigations- und Steuergeräte, Lautsprecheranlage, Beleuchtung) versorgt. Das Teilbordnetz 20 hat üblicherweise eine Nennspannung von 400V bei einer Nennfrequenz von 50 Hz oder 440V bei 60 Hz. Die beiden Teilbordnetze 20 sind über Schalter 23 miteinander koppelbar, so dass die Versorgung beider Teilbordnetze 20 auch bei Ausfall oder Abschaltung einer der beiden Antriebswellen 12, 13 möglich ist.

Jeweils ein von einem Bordnetzaggregat 24 angetriebener zusätzlicher Hafengenerator 25 dient, vorzugsweise über einen nicht näher dargestellten nachgeschalteten Umrichter, zur Versorgung jeweils eines Teilbordnetzes 20 oder der miteinander gekoppelten Teilbordnetze 20 mit einer Spannung mit konstanter Amplitude und konstanter Frequenz bei abgeschalteten elektrischen Wellen 12, 13. Dies ist beispielsweise der Fall, wenn sich das Schiff im Hafen befindet und keine Antriebsleistung benötigt oder wenn die gesamte Leistung der Generatoren 4, 34 für den Antrieb benötigt wird. Ergänzend oder alternativ können die Teilbordnetze 20 statt durch den Hafengenerator 25 auch durch eine Batterie oder durch Brennstoffzellen oder eine Batterieanlage gespeist werden. Möglich ist auch, dass die gesamte Antriebsleistung auf die drei Antriebsmotoren 5 der drei elektrischen Wellen 11, 12, 13 verteilt wird.

In einem ersten Betriebszustand sind Schalter 26 geschlossen und es kann Antriebsleistung von den Bordnetzaggregaten 24 über die Umrichter 22 und jeweils einen Transformator 21 an den Sammelleiter 7 übertragen werden. Bei geeigneter Schaltung kann mit dieser Leistung der Antriebsmotor 5 der ersten elektrischen Welle 11 angetrieben werden.

In einem zweiten Betriebszustand wird der Antriebsmotor 5 der ersten elektrischen Welle 11 nicht mehr über die Umrichter 22 versorgt, sondern über die erste Verbrennungskraftmaschine 3 und den damit gekoppelten Generator 4. Hierzu sind die Schalter 9 der ersten elektrischen Welle 11 geschlossen und beispielsweise die Leitungsverbindungen 14 und 15 geöffnet.

Die Leitungsverbindungen 14 und 15 sind in einem dritten Betriebszustand geschlossen, so dass die Umrichter 22 Leistung an den Antriebsmotor 5 der ersten elektrischen Welle 11 übertragen können. Zusätzlich ist, wie im zweiten Betriebszustand, die erste elektrische Welle aktiv, so dass auch die erste Verbrennungskraftmaschine 3 und der angekoppelte Generator 4 den Antriebsmotor 5 versorgen. Dies ist dadurch möglich, dass der Umrichter 22 als Slave fungiert und seine Ausgangswechselspannung an die Wechselspannung des Generators 5 anpasst.

Bei einem vierten Betriebszustand sind die Leitungsverbindungen 14 und 15 geschlossen, die Schalter 26 jedoch geöffnet. Die Umrichter 22 tragen somit nicht zur Antriebsleistung bei. Die Schalter 9 der beiden elektrischen Antriebswellen 12 und 13 sind geschlossen, so dass die weiteren Verbrennungskraftmaschinen 6 über die Generatoren 34 Antriebsleistung mittels des Sammelleiters 7 an den Antriebsmotor 5 der ersten elektrischen Welle 11 übergeben können. Dadurch sind hohe Propellerdrehzahlen bei hohem Drehmoment möglich.

Für den fünften Betriebszustand werden ausgehend vom vierten Betriebszustand noch die Schalter 26 geschlossen, so dass auch die Umrichter 22 elektrische Leistung an die Sammelleiter 7 übertragen.

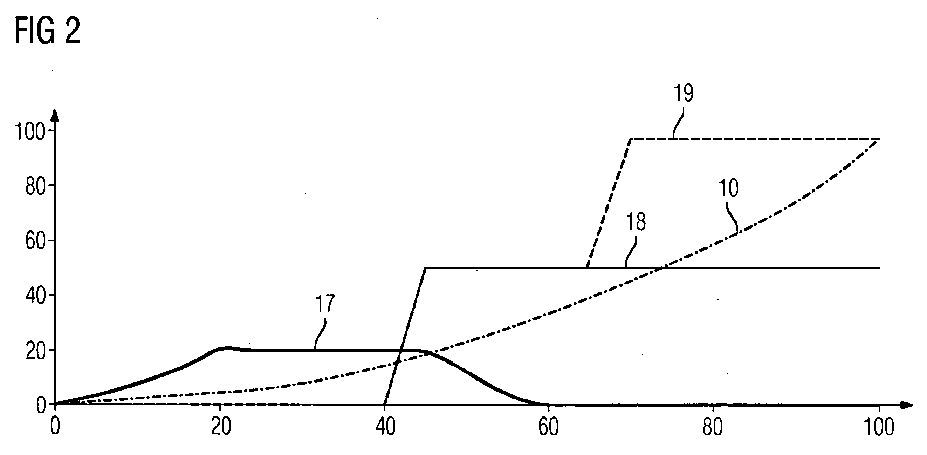

Figur 2 zeigt einen beispielhaften Verlauf einer Antriebskaskadierung in Abhängigkeit einer relativen Propellerdrehzahl. Bei Erhöhung der Propellerdrehzahl steigt die dafür benötigte drehzahlabhängige Propellerleistung 10 kontinuierlich an, wobei sowohl die Propellerdrehzahl als auch die Propellerleistung in Relation zu jeweils maximalen Größe gesetzt werden. Somit ist bei der maximalen Propellerdrehzahl von 100% auch die Propellerleistung maximal und nimmt den Wert 100% an, wobei auf die maximalen Größen bei Dauerbetrieb Bezug genommen wird. Insbesondere durch Gasturbinen ist allerdings auch ein kurzzeitiger Betrieb mit mehr als 100% denkbar, was sich durch ihre Überlastfähigkeit begründet und bei Notmanövern zum Einsatz kommen kann.

Die Antriebskaskadierung besteht darin, für Propellerdrehzahlen kleiner als 40% lediglich die vergleichsweise kleine verfügbare Leistung 17 eines Umrichters zu verwenden, welcher bis zu 20% der maximalen Propellerleistung bewerkstelligen kann. Leistungsstärkere Antriebseinheiten, wie Gasturbinen oder große Dieselmotoren, können ausgeschaltet bleiben, so dass die jeweiligen Komponenten nahe am optimalen Betriebspunkt betrieben werden können und Energie gespart wird.

Für mittlere Propellerdrehzahlen im Bereich von 45% bis 70% der maximalen Propellerdrehzahl hält eine erste elektrische Welle, welche beispielsweise eine Gasturbine umfassen kann, die verfügbare Leistung 18 bereit. Der Umrichter kann nunmehr ausgeschaltet werden oder ganz entsprechend den Bedürfnissen des Bordnetzes betrieben werden, da die erste elektrische Welle allein bis zu 50% der maximalen Propellerleistung aufbringen kann. Entsprechend kann die verfügbare Leistung 17 des Umrichters bei mittleren Propellerdrehzahlen auf Null zurückgefahren werden.

Mehrere elektrische Wellen werden schließlich für hohe Propellerdrehzahlen ab 65% der maximalen Propellerdrehzahl eingesetzt. Die verfügbare Leistung 19 der elektrischen Wellen ist genügend groß, um die maximale Propellerdrehzahl bewirken zu können.

Wie gut zu sehen ist, werden während des Umschaltens bei steigender Propellerdrehzahl die erste oder die mehreren elektrischen Wellen früh genug gestartet, um den schon erwähnten Zeitkonstanten Rechnung zu tragen. Auch beim Verringern der Propellerdrehzahl findet eine rechtzeitige Synchronisation statt, zum Beispiel indem der Umrichter seine verfügbare Leistung 17 rechtzeitig hochfährt. Somit bleibt genügend Zeit für die Synchronisation der Antriebsleistung und der Wechselspannung, was einen praktisch ruckfreien, kontinuierlichen Beschleunigungs- bzw. Verzögerungsverlauf ermöglicht. Dies ist während des Manövrierens mit geringen Geschwindigkeiten von Vorteil.

Zusätzlich zu den gezeigten Antriebskaskaden können weitere Stufen verwirklicht werden, indem einer elektrischen Welle der Umrichter zugeschaltet wird, um eine größere mittlere Propellerdrehzahl zu ermöglichen. Weiterhin kann der Umrichter auch den mehreren elektrischen Wellen zugeschaltet werden, um eine noch größere Maximalleistung des Antriebssystems zu erreichen. Dies kann besonders in Notsituationen große Vorteile bieten, in denen möglichst schnell beschleunigt oder verzögert werden soll.

Zusammenfassend betrifft die Erfindung ein Antriebsverfahren für ein Antriebssystem, welches vorsieht
- zumindest einen Antriebspropeller des Antriebssystems unterhalb einer ersten vorgebbaren Propellerdrehzahl gemäß einem ersten Betriebszustand zu betreiben, indem zumindest ein, mit dem zumindest einen Antriebspropeller verbundener Antriebsmotor des Antriebssystems mittels einer ersten Wechselspannung betrieben wird,
   wobei gemäß dem ersten Betriebszustand zumindest ein Umrichter die erste Wechselspannung bereitstellt,
- den zumindest einen Antriebspropeller oberhalb der ersten vorgebbaren Propellerdrehzahl gemäß einem zweiten Betriebszustand zu betreiben, indem der zumindest eine Antriebsmotor mittels einer zweiten Wechselspannung betrieben wird, wobei gemäß dem zweiten Betriebszustand eine erste Verbrennungskraftmaschine einen ersten Generator antreibt, welcher die zweite Wechselspannung erzeugt.

Um ein Wasserfahrzeug vom Stillstand bis zur Maximalgeschwindigkeit und umgekehrt bei kontinuierlichem Vortrieb unter Vermeidung von ruckhaften Vortriebsänderungen bei gleichzeitig wirtschaftlichem Betrieb der einzelnen Antriebskomponenten bewegen zu können, wird vorgeschlagen, bei einem Übergang vom ersten in den zweiten Betriebszustand oder umgekehrt die erste Verbrennungskraftmaschine zunächst mit einer derartigen Drehzahl zu betreiben, dass der zumindest eine Antriebspropeller mit der ersten vorgebbaren Propellerdrehzahl betrieben wird, und die erste Wechselspannung mit der zweiten Wechselspannung mittels des zumindest einen Umrichters zu synchronisieren.

## Patentansprüche

1. Antriebsverfahren für ein Antriebssystem mit den folgenden Verfahrensschritten:
- Betreiben zumindest eines Antriebspropellers (2) des Antriebssystems unterhalb einer ersten vorgebbaren Propellerdrehzahl gemäß einem ersten Betriebszustand durch Betreiben zumindest eines, mit dem zumindest einen Antriebspropeller (2) verbundenen Antriebsmotors (5) des Antriebssystems mittels einer ersten Wechselspannung,
- wobei gemäß dem ersten Betriebszustand zumindest ein Umrichter (22) die erste Wechselspannung bereitstellt,
- Betreiben des zumindest einen Antriebspropellers (2) oberhalb der ersten vorgebbaren Propellerdrehzahl gemäß einem zweiten Betriebszustand durch Betreiben des zumindest einen Antriebsmotors (5) mittels einer zweiten Wechselspannung,
- wobei gemäß dem zweiten Betriebszustand eine erste Verbrennungskraftmaschine (3) einen ersten Generator (4) antreibt, welcher die zweite Wechselspannung erzeugt,
**dadurch gekennzeichnet, dass**
- bei einem Übergang vom ersten in den zweiten Betriebszustand oder umgekehrt die erste Verbrennungskraftmaschine (3) zunächst mit einer derartigen Drehzahl betrieben wird, dass der zumindest eine Antriebspropeller (2) mit der ersten vorgebbaren Propellerdrehzahl betrieben wird, und der zumindest eine Umrichter (22) die erste Wechselspannung mit der zweiten Wechselspannung synchronisiert.

2. Antriebsverfahren nach Anspruch 1 mit dem folgenden weiteren Verfahrensschritt:
- Betreiben des zumindest einen Antriebspropellers (2) oberhalb einer zweiten vorgebbaren Propellerdrehzahl, welche größer als die erste vorgebbare Propellerdrehzahl ist, gemäß einem dritten Betriebszustand durch Betreiben des zumindest einen Antriebsmotors (5) mittels einer dritten Wechselspannung,
- wobei gemäß dem dritten Betriebszustand die erste Wechselspannung des zumindest einen Umrichters (22) in synchronisierter Kombination mit der zweiten Wechselspannung die dritte Wechselspannung ergibt,
- wobei bei einem Übergang vom zweiten Betriebszustand in den dritten Betriebszustand der zumindest eine Antriebsmotor (5) erst dann mittels der dritten Wechselspannung betrieben wird, wenn die erste Wechselspannung mittels des zumindest einen Umrichters (22) mit der zweiten Wechselspannung synchronisiert ist.

3. Antriebsverfahren nach Anspruch 1 mit dem folgenden weiteren Verfahrensschritt:
- Betreiben des zumindest einen Antriebspropellers (2) oberhalb einer dritten vorgebbaren Propellerdrehzahl, welche größer als die erste vorgebbare Propellerdrehzahl ist, gemäß einem vierten Betriebszustand durch Betreiben des zumindest einen Antriebsmotors (5) mittels einer vierten Wechselspannung,
- wobei gemäß dem vierten Betriebszustand zumindest eine weitere Verbrennungskraftmaschine (6) zumindest jeweils einen weiteren Generator (34) antreibt, welcher jeweils eine weitere Wechselspannung erzeugt, welche in synchronisierter Kombination mit der zweiten Wechselspannung die vierte Wechselspannung ergibt,
- wobei bei einem Übergang vom zweiten in den vierten Betriebszustand ein jeweiliger Polradwinkel des zumindest einen weiteren Generators (34) mit einem ersten Polradwinkel des ersten Generators (4) synchronisiert wird.

4. Antriebsverfahren nach Anspruch 3 mit dem folgenden weiteren Verfahrensschritt:
- Betreiben des zumindest einen Antriebspropellers (2) oberhalb einer vierten vorgebbaren Propellerdrehzahl gemäß einem fünften Betriebszustand durch Betreiben des zumindest einen Antriebsmotors (5) mittels einer fünften Wechselspannung,
- wobei gemäß dem fünften Betriebszustand die erste Wechselspannung des zumindest einen Umrichters (22) in synchronisierter Kombination mit der vierten Wechselspannung die fünfte Wechselspannung ergibt,
- wobei bei einem Übergang vom vierten Betriebszustand in den fünften Betriebszustand der zumindest eine Antriebsmotor (5) erst dann mittels der fünften Wechselspannung betrieben wird, wenn die erste Wechselspannung mittels des zumindest einen Umrichters (22) mit der dritten Wechselspannung synchronisiert ist.

5. Antriebsverfahren nach einem der vorhergehenden Ansprüche, wobei während des Betriebs in einem der Betriebszustände im Fall eines Ausfalls von zum Erzeugen der jeweiligen Wechselspannung erforderlichen Teilen des Antriebssystems in einen anderen Betriebszustand übergegangen wird,
wobei eine Synchronisation der jeweiligen Wechselspannung des anderen Betriebszustands unter Berücksichtigung der am zumindest einen Antriebsmotor anliegenden Wechselspannung vorgenommen wird.

6. Steuerung für ein Wasserfahrzeug mit zumindest einem Antriebssystem,
wobei die Steuerung Mittel zur Durchführung eines Verfahrens nach einem der Ansprüche 1 - 5 aufweist.

7. Wasserfahrzeug mit
- zumindest einem Antriebssystem,
- einer Steuerung, welche nach Anspruch 6 ausgebildet ist.

8. Computerprogramm zur Durchführung eines Verfahrens nach einem der Ansprüche 1 - 5 bei Ablauf in einer Steuerung nach Anspruch 6.

9. Computerprogrammprodukt, auf dem ein Computerprogramm nach Anspruch 8 gespeichert ist.

## Claims

1. Drive method for a drive system having the following method steps:
- operating at least one drive propeller (2) of the drive system below a first predefinable propeller rotational speed according to a first operating state by operating at least one drive motor (5), connected to the at least one drive propeller (2), of the drive system by means of a first alternating voltage,
- wherein according to the first operating state at least one power inverter (22) makes available the first alternating voltage,
- operating the at least one drive propeller (2) above the first predefinable propeller rotational speed according to a second operating state by operating the at least one drive motor (5) by means of a second alternating voltage,
- wherein according to the second operating state a first internal combustion engine (3) drives a first generator (4), which generates the second alternating voltage, **characterised in that**
- during a transition from the first operating state to the second or vice versa the first internal combustion engine (3) is initially operated at such a rotational speed that the at least one drive propeller (2) is operated at the first predefinable propeller rotational speed and the at least one power inverter (22) synchronises the first alternating voltage with the second alternating voltage.

2. Drive method according to claim 1, having the following further method step:
- operating the at least one drive propeller (2) above a second definable propeller rotational speed, which is higher than the first predefinable propeller rotational speed, according to a third operating state by operating the at least one drive motor (5) by means of a third alternating voltage,
- wherein according to the third operating state the first alternating voltage of the at least one power inverter (22) in synchronised combination with the second alternating voltage produces the third alternating voltage,
- wherein during a transition from the second operating state to the third operating state the at least one drive motor (5) is only operated by means of the third alternating voltage when the first alternating voltage is synchronised with the second alternating voltage by means of the at least one power inverter (22).

3. Drive method according to claim 1, having the following further method step:
- operating the at least one drive propeller (2) above a third predefinable propeller rotational speed, which is higher than the first predefinable propeller rotational speed, according to a fourth operating state by operating the at least one drive motor (5) by means of a fourth alternating voltage,
- wherein according to the fourth operating state at least one further internal combustion engine (6) drives at least one further generator (34) in each instance, which generates a further alternating voltage in each instance, which in synchronised combination with the second alternating voltage produces the fourth alternating voltage,
- wherein during a transition from the second operating state to the fourth a respective polar wheel angle of the at least one further generator (34) is synchronised with a first polar wheel angle of the first generator (4).

4. Drive method according to claim 3, having the following further method step:
- operating the at least one drive propeller (2) above a fourth predefinable propeller rotational speed according to a fifth operating state by operating the at least one drive motor (5) by means of a fifth alternating voltage,
- wherein according to the fifth operating state the first alternating voltage of the at least one power inverter (22) in synchronised combination with the fourth alternating voltage produces the fifth alternating voltage,
- wherein during a transition from the fourth operating state to the fifth operating state the at least one drive motor (5) is only operated by means of the fifth alternating voltage when the first alternating voltage is synchronised with the third alternating voltage by means of the at least one power inverter (22).

5. Drive method according to one of the preceding claims, wherein during operation in one of the operating states a transition is made to another operating state in the event of a failure of parts of the drive system required to generate the respective alternating voltage,
wherein synchronisation of the respective alternating voltage of the other operating state is performed taking into account the alternating voltage present at the at least one drive motor.

6. Controller for a water craft having at least one drive system,
wherein the controller has means for carrying out a method according to one of claims 1 - 5.

7. Water craft having
- at least one drive system,
- a controller configured according to claim 6.

8. Computer program for carrying out a method according to one of claims 1-5 when run in a controller according to claim 6.

9. Computer program product, on which a computer program according to claim 8 is stored.

## Revendications

1. Procédé de propulsion pour un système de propulsion ayant les stades de procédé suivants :
- on fait fonctionnement au moins une hélice de propulsion du système de propulsion à une première vitesse d'hélice pouvant être donnée à l'avance suivant un premier état de fonctionnement, en faisant fonctionner au moins un moteur ( 5 ) de propulsion, relié à la au moins une hélice ( 2 ) de propulsion, du système de propulsion au moyen d'une première tension alternative,
- dans lequel suivant le premier état de fonctionnement au moins un convertisseur ( 22 ) met à disposition la première tension alternative,
- on fait fonctionner la au moins une hélice ( 2 ) de propulsion au-dessus de la première vitesse de rotation d'hélice pouvant être donnée à l'avance suivant un deuxième état de fonctionnement, en faisant fonctionner le au moins un moteur ( 5 ) de propulsion au moyen d'une deuxième tension alternative,
- dans lequel, suivant le deuxième état de fonctionnement, une machine ( 3 ) à combustion interne entraîne une première génératrice ( 4 ) qui produit la deuxième tension alternative,
**caractérisé en ce que**
- lors d'un passage du premier au deuxième état de fonctionnement ou inversement, on fait fonctionner la première machine ( 3 ) à combustion interne, d'abord à une vitesse de rotation telle que la au moins une hélice ( 2 ) de propulsion fonctionne à la première vitesse de rotation d'hélice pouvant être donnée à l'avance et le au moins un convertisseur ( 22 ) synchronise la première tension alternative à la deuxième tension alternative.

2. Procédé de propulsion suivant la revendication 1, comprenant le stade de procédé supplémentaire suivant :
- on fait fonctionner la au moins une hélice ( 2 ) de propulsion au-dessus d'une deuxième vitesse de rotation d'hélice pouvant être donnée à l'avance, qui est plus grande que la première vitesse de rotation d'hélice pouvant être donnée à l'avance, suivant un troisième état de fonctionnement, en faisant fonctionner le au moins un moteur ( 5 ) de propulsion au moyen d'une troisième tension alternative,
- dans lequel, suivant le troisième état de fonctionnement, la première tension alternative du au moins un convertisseur ( 22 ) donne, en combinaison synchronisée avec la deuxième tension alternative, la troisième tension alternative,
- dans lequel, lors d'un passage du deuxième état de fonctionnement au troisième état de fonctionnement, on ne fait fonctionner le au moins un moteur ( 5 ) de propulsion au moyen de la troisième tension alternative que si la première tension alternative est, au moyen du au moins un convertisseur ( 22 ), synchronisée à la deuxième tension alternative.

3. Procédé de propulsion suivant la revendication 1,
ayant le stade de procédé supplémentaire suivant :
- on fait fonctionner la au moins une hélice ( 2 ) de propulsion au-dessus d'une troisième vitesse de rotation d'hélice pouvant être donnée à l'avance, qui est plus grande que la première vitesse de rotation d'hélice pouvant être donnée à l'avance, suivant un quatrième état de fonctionnement, en faisant fonctionner le au moins un moteur ( 5 ) de propulsion au moyen d'une quatrième tension alternative,
- dans lequel, suivant le quatrième état de fonctionnement, au moins une autre machine ( 6 ) à combustion interne entraîne au moins respectivement une autre génératrice ( 34 ) qui produit respectivement une autre tension alternative, laquelle donne, en combinaison synchronisée avec la deuxième tension alternative, la quatrième tension alternative,
- dans lequel, lors d'un passage du deuxième au quatrième état de fonctionnement, on synchronise un angle de roue polaire respective de la au moins une autre génératrice ( 34 ) avec un premier angle de roue polaire de la première génératrice ( 4 ).

4. Procédé de propulsion suivant la revendication 3,
ayant le stade de procédé supplémentaire suivant :
- on fait fonctionner la au moins une hélice ( 2 ) de propulsion au-dessus d'une quatrième vitesse de rotation d'hélice pouvant être donnée à l'avance suivant un cinquième état de fonctionnement, en faisant fonctionner le au moins le moteur ( 5 ) au moyen d'une cinquième tension alternative,
- dans lequel, suivant le cinquième état de fonctionnement, le au moins un convertisseur ( 22 ) donne, en combinaison synchronisée avec la quatrième tension alternative, la cinquième tension alternative,
- dans lequel, lors d'un passage du quatrième état de fonctionnement au cinquième état de fonctionnement, on fait fonctionner le au moins un moteur ( 5 ) de propulsion au moyen de la cinquième tension alternative seulement si la première tension alternative est, au moyen du au moins un convertisseur ( 22 ), synchronisée avec la troisième tension alternative.

5. Procédé de propulsion suivant l'une des revendications précédentes,
dans lequel, pendant le fonctionnement dans l'un des états de fonctionnement, dans le cas d'une panne de parties du système de propulsion nécessaires à la production de la tension alternative respective, on passe dans un autre état de fonctionnement,
dans lequel on procède à une synchronisation de la tension alternative respective de l'autre état de fonctionnement en tenant compte de la tension alternative s'appliquant au au moins un moteur de propulsion.

6. Commande d'un bâtiment de navigation sur l'eau comprenant au moins un système de propulsion,
dans laquelle la commande a des moyens pour effectuer un procédé suivant l'une des revendications 1 à 5.

7. Bâtiment de navigation sur l'eau comprenant
- au moins un système de propulsion,
- une commande constituée suivant la revendication 6.

8. Programme d'ordinateur pour effectuer un procédé suivant l'une des revendications 1 à 5 lorsqu'il se déroule dans une commande suivant la revendication 6.

9. Produit de programme d'ordinateur sur lequel est mémorisé un programme d'ordinateur suivant la revendication 8.
